Europäisches Patentamt

European Patent Office

Office européen des brevets

(11) Veröffentlichungsnummer: **0 265 926**
**B1**

(12) EUROPÄISCHE PATENTSCHRIFT

(45) Veröffentlichungstag der Patentschrift:
05.09.90

(51) Int. Cl.⁵: **B60R 22/36, B60R 22/38**

(21) Anmeldenummer: 87115822.6

(22) Anmeldetag: 28.10.87

(54) Sensor- und Sperrvorrichtung für ein Sicherheitsgurtsystem.

(30) Priorität: 29.10.86 DE 3636847

(43) Veröffentlichungstag der Anmeldung:
04.05.88 Patentblatt 88/18

(45) Bekanntmachung des Hinweises auf die Patenterteilung:
05.09.90 Patentblatt 90/36

(84) Benannte Vertragsstaaten:
FR GB IT

(56) Entgegenhaltungen:
EP-A- 0 121 256
DE-A- 3 418 378
FR-A- 2 290 227
GB-A- 2 154 853

(73) Patentinhaber: Autoliv-Kolb GmbH & Co.,
Theodor-Heuss-Strasse 2, D-8060 Dachau(DE)

(72) Erfinder: Ogris, Gottfried, Alleestrasse 4,
D-8044 Unterschleissheim(DE)

(74) Vertreter: Görg, Klaus, Dipl.-Ing. et al, Hoffmann, Eitle &
Partner Arabellastrasse 4 (Sternhaus),
D-8000 München 81(DE)

## Beschreibung

Die Erfindung bezieht sich auf eine Sensor- und Sperrvorrichtung für ein Sicherheitsgurtsystem, mit einer drehbaren Trägheitsmasse, einer auf einer Umfangssteuernockenfläche der Trägheitsmasse unter Vorspannung anliegenden Sensorklinke und einer Innenverzahnung, in die die Sensorklinke, gesteuert durch die Drehung der Trägheitsmasse, eingreifen kann (DE-A 3 418 378).

Die Problematik der Erfindung ergibt sich in erster Linie bei einem Gurtband-ansprechenden Sensor für Sicherheitsgurtsysteme. Bei einem derartigen Sensor ist eine Sensorklinke an einem Steuerrad befestigt, welches sich beim Abzug des Sicherheitsgurtbandes zusammen mit der Spulenwelle dreht. Zusammen mit dem Steuerrad dreht sich auch eine Trägheitsmasse, die jedoch durch Überwindung einer Feder relativ zum Steuerrad in einem begrenzten Umfang drehbar ist. Die Trägheitsmasse ist als Trägheitsscheibe ausgebildet, die in einem Umfangsbereich segmentartig abgeschnitten ist, so daß eine Umfangssteuernockenfläche ausgebildet wird, die im wesentlichen senkrecht zur Drehachse der Trägheitsscheibe verläuft. An dieser Umfangssteuernockenfläche liegt mit einem von ihrer Drehachse entfernt liegenden Nocken die Sensorklinke an. Wenn sich die Trägheitsscheibe unter Überwindung einer Feder relativ zum Steuerrad dreht, so wirkt die Trägheitsscheibe mit einer konstanten Drehbeschleunigung auf die federbelastete Sensorklinke, wodurch diese entlang der Umfangssteuernockenfläche weg von der Drehachse der Trägheitsscheibe gleitet und dabei mit ihrem Klinkenzahn sich nach außen in Eingriff mit der Innenverzahnung bewegt.

Herstellungstoleranzen hinsichtlich der Rundheit des Innenkranzes der Innenverzahnung sowie der Lagerung der Trägheitsmasse und der Sensorklinke führen an unterschiedlichen Umfangsstellen der Innenverzahnung zu einem unterschiedlichen Bewegungsweg der Klinke in Eingriff mit der Innenverzahnung an den verschiedenen Umfangsstellen, unabhängig davon, an welcher Umfangsstelle die Relativbewegung zwischen Steuerung und Trägheitsscheibe einsetzt. Dies hat zur Folge, daß an den verschiedenen Umfangsstellen zeitlich unterschiedlich ein Eingriff der Sensorklinke mit der Innenverzahnung erfolgt.

Daher besteht die Aufgabe der Erfindung darin, eine Sensor- und Sperrvorrichtung für ein Sicherheitsgurtsystem zu schaffen, bei dem auch beim Bestehen von Herstellungstoleranzen hinsichtlich der Rundheit der Innenverzahnung sowie der Lagerung der Trägheitsmasse und der Sensorklinke über den gesamten Umfang an jeder Umfangsstelle ein gleichartiger Zahneingriff gewährleistet ist.

Diese Aufgabe wird erfindungsgemäß dadurch gelöst, daß die Umfangssteuernockenfläche ab einem bestimmten Grenzberührungspunkt zwischen Sensorklinke und Umfangsnockensteuerfläche, der die nächstmögliche Nichteingriffsstellung zwischen Sensorklinke und Innenverzahnung definiert, von dem Grenzberührungspunkt aus hinsichtlich einer Verringerung des Drehmomentes seitens der Sensorklinke auf die Trägheitsmasse abfallend verläuft.

Die abfallende Charakteristik der Umfangssteuernockenfläche erfüllt den folgenden Zweck. Normalerweise nimmt bei Anordnung der Umfangssteuernockenfläche im wesentlichen senkrecht zur Drehachse der Trägheitsmasse der Hebelarm zu, mit dem die Kraft in bezug auf die Drehachse der Trägheitsmasse wirksam ist, die von der Sensorklinke als Normalkraft auf die Umfangssteuernockenfläche und somit auf die Trägheitsmasse wirkt, da der Berührungspunkt zwischen Sensorklinke und Umfangssteuernockenfläche bei zunehmender Relativbewegung zwischen Trägheitsmasse und Steuerrad nach außen wandert. Bei zunehmender Federkraft der auf die Sensorklinke wirkenden Feder wirkt die dadurch ausgeübte Normalkraft als Drehmoment im konstanten Drehmoment der Trägheitsscheibe entgegen, und zwar zunehmend, da, wie zuvor erwähnt, der Hebelarm in diesem Fall zunimmt. Durch die beanspruchende abfallende Charakteristik der Umfangssteuernockenflächen bewirkt man ab der bestimmten Stelle ein Gleichbleiben oder sogar ein Abnehmen des genannten Hebelarmes und somit eine abrupte Reduzierung des Drehmomentes mit der Folge, daß von diesem Punkt an die Sensorklinke plötzlich in ihre Eingriffsstellung in die Innenverzahnung "schnellt", so daß dadurch eine Kompensation der genannten Herstellungstoleranzen erfolgt.

Die erfindungsgemäße Lösung basiert somit auf der Erkenntnis, daß die Reaktionskraft im Berührungsbereich zwischen Sensorklinke und Trägheitsmasse dafür verantwortlich ist, wie schnell ein Eingriff bzw. wann ein Eingriff zwischen Sensorklinke und Innenverzahnung erfolgt. Das Maß der abfallenden Charakteristik hängt von den jeweiligen Dimensionsverhältnissen ab.

Der genannte Ausgangspunkt für die abfallende Charakteristik der Umfangssteuernockenfläche bestimmt sich danach, wie nah unter Berücksichtigung der Herstellungstoleranzen die Sensorklinke an die Innenverzahnung herangebracht werden kann, ohne daß an irgendeiner Umfangsstelle bereits ein Zahneingriff erfolgt.

Vorzugsweise ist die Kontur der Sensorklinkenspitze so ausgelegt bzw. ausgebildet (gegebenenfalls konkave Ausnehmung), daß nur die Klinkenspitze beim Einsteuern mit der Innenverzahnung bzw. den Steuerscheibenzähnen in Berührung gelangt. Dadurch werden Klinkenabweisungen vermieden und die Klinke, hier insbesondere die gurtbandsensitiv wirksame Klinke, in die Verzahnung der Steuerscheibe gezogen, was gleichmäßigere gurtbandsensitive Werte in jeder Stellung zur Folge hat.

Vorteilhafterweise besteht innerhalb des Grenzberührungspunktes eine ansteigende Charakteristik der Umfangssteuernockenfläche mit dem Ergebnis, daß dadurch die Federkraft der auf die Sensorklinke wirkenden Feder aufgrund der Bewegung der Sensorklinke früher zunimmt und daher eine schwächere Feder verwendet werden kann. Diese Feder ist vorteilhafterweise eine Blattfeder, die kleinere Herstellungstoleranzen hat als eine Spiralfeder.

Die Blattfeder ist vorzugsweise an der Sensorklinke festgelegt, so daß eine Längsbewegung der Blattfeder dort, wo sie mit der Sensorklinke in Berührung steht, vermieden wird. Dadurch werden die Reibungsverluste bei der Bewegung der Sensorklinke erheblich reduziert. Eine Längsbewegung der Blattfeder tritt nur an der Abstützung der Feder außerhalb der Sensorklinke auf, beispielsweise beim am Steuerrad vorhandenen Federlager.

Vorteilhafterweise ist der erfindungsgemäße Sensor ein Gurtband-ansprechender Sensor, d.h. ein sogenannter WS-Sensor.

Die Erfindung wird nachfolgend anhand einiger, in den Zeichnungen rein schematisch dargestellter Ausführungsbeispiele näher erläutert. Es zeigt:

Fig. 1 eine perspektivische Ansicht eines Teils einer bekannten Steuerungsmechanik eines Gurtaufrollers mit einem Gurtband-ansprechenden und einem Fahrzeug-ansprechenden Sensor,

Fig. 2 eine Teilschnittansicht durch die Steuerungsmechanik gemäß Fig. 1,

Fig. 3 eine schematische Seitenansicht der Gurtband-ansprechenden Sensorik,

Fig. 4 eine schematische Teilseitenansicht einer Gurtband-ansprechenden Sensorik mit einer etwas abgewandelten Betätigungsmechanik,

Fig. 5a eine schematische Teilansicht von Trägheitsmasse uns Sensorklinke gemäß der Erfindung in der Ruhestellung,

Fig. 5b eine schematische Darstellung gemäß Fig. 5a, jedoch mit voll eingesteuerter Sensorklinke,

Fig. 6 ein Diagramm mit der Darstellung des Drehausmaßes der Trägheitsmasse auf der Abszisse und der Kraftveränderung,

Fig. 7a eine der Fig. 5a ähnliche Darstellung, jedoch mit abgewandelter Steuernockenfläche in der Ruhestellung,

Fig. 7b eine schematische Darstellung gemäß Fig. 7a, jedoch in der voll eingesteuerten Stellung der Sensorklinke,

Fig. 8 ein Diagramm, ähnlich dem Diagramm der Fig. 6, jedoch für die Steuernockenfläche gemäß Fig. 7a und 7b.

Fig. 9 eine schematische Teilansicht des Eingriffsbereiches zwischen Innenverzahnung und Sensorklinke,

Fig. 10 schematisch den Spitzenabschnitt der Sensorklinke,

Fig. 11 schematisch die Sensorklinke mit Blattfeder.

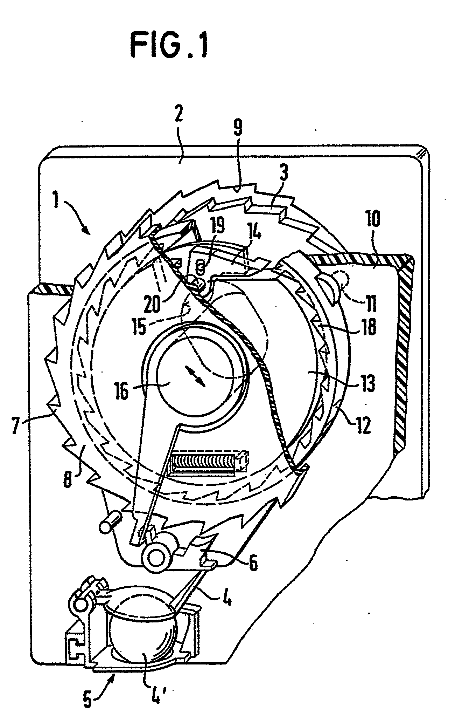

Die grundsätzliche Steuermechanik wird nachfolgend anhand von Fig. 1-3 beschrieben.

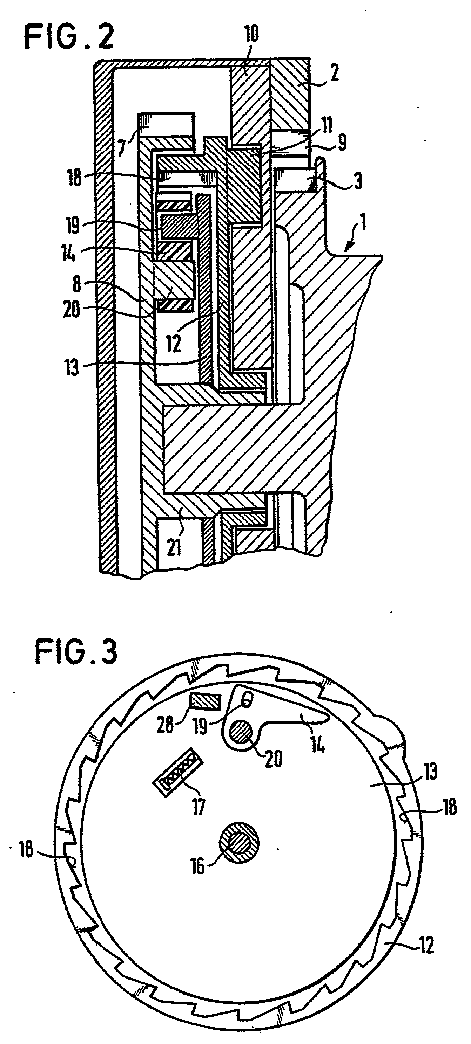

In Fig. 1 ist ein Teil einer Steuerungsmechanik eines Gurtaufrollers dargestellt und man erkennt besonders gut den Zusammenbau der Steuerteile, wobei die Darstellung auf die Abbildung eines linken Rahmenschenkels (2) und eines darin geführten linken Zahnkranzes (3) der Welle (1) beschränkt ist. Dabei ist der Gurtaufroller in Ruhestellung gezeigt. Ein Impulshebel (4) einer eine Sensorkugel (4') aufweisenden fahrzeugsensitiven Einrichtung (5) liegt an der Unterseite einer Steuerklinke (6), die ihrerseits in eine Außenverzahnung (7) eines Steuerrades (8) eingreift. Die Welle (1) ist in Fig. 2 nicht sichtbar. Man erkennt jedoch den linken Zahnkranz (3) der Wellenverzahnung, der sich in der Ruhestellung außer Eingriff mit einer gehäuseseitigen Verzahnung (9) im linken Rahmenschenkel (2) befindet. Eine Mechanikgrundplatte (10), in der sich ein Lagerzapfen (11) als Drehpunkt für eine Steuerscheibe (12) befindet, ist gestrichelt dargestellt. Die gesamte Steuerscheibe (12) mit dem darin geführten Steuerrad (8) und einer zwischen Steuerscheibe (12) und Steuerrad (8) angeordneten Trägheitsscheibe (13) wird nach erfolgter Sperrung zwischen Steuerscheibe (12) und Steuerad (8), die wahlweise durch die fahrzeugsensitive Steuerklinke (6) oder aber durch eine gurtbandsensitive Klinke (14) ausgelöst werden kann, um den Lagerzapfen (11) in einem Langloch (15) in der Mechanikgrundplatte (10) aus der in Fig. 1 dargestellten Ruhelage in die Blockierlage angehoben, wobei ein Zapfen (16) der Welle im Langloch (15) in Fig. 1 nach links oben bewegt wird und der Zahnkranz (3) in Eingriff mit der gehäuseseitigen Verzahnung (9) gelangt.

Eine zwischen der Trägheitsscheibe (13) und dem Steuerrad (8) in einer entsprechenden Aussparung eingespannte Druckfeder (17) sorgt dafür, daß in der Ruhelage gemäß Fig. 1 die gurtbandsensitive Klinke (14) außer Eingriff mit einer Innenverzahnung (18) der Steuerscheibe (12) bleibt. Erst wenn infolge des über ein gewisses Maß hinausgehenden Gurtbandabzuges die Trägheitsscheibe (13) in ihrer Bewegung hinter der Bewegung des Steuerrades (8) zurückbleibt, wird unter Überwindung der Kraft der Druckfeder (17) eine Relativbewegung zwischen Trägheitsscheibe (13) und Steuerrad (8) erreicht, durch welche die Klinke durch den gegenseitigen Versatz zwischen einem Stift (19) auf der Trägheitsscheibe (13) und einem Lagerzapfen (20) auf dem Steuerrad (8) nach außen in die Innenverzahnung (18) der Steuerscheibe (12) verschwenkt. Dadurch erhält man eine von der fahrzeugsensitiven Einrichtung unabhängige Sperrung des Gurtaufrollers, durch welche die Welle (1) in einer genau definierten Lage des Zahnkranzes (3) gegenüber dem gehäuseseitigen Zahnsegment (9) in die Blockierstellung angehoben wird.

Die besondere Wirkung der von der fahrzeugsensitiven Einrichtung (5) beaufschlagten Steuerklinke (4) und der von der Trägheitscheibe (13) beaufschlagten gurtbandsensitiven Klinke (14) wird unter Bezugnahme auf die Fig. 2 und 3 noch genauer beschrieben.

Die gurtbandsensitive Sperreinrichtung besteht, wie man besonders gut aus den Fig. 2 und 3 erkennt, aus der Trägheitsscheibe 13, die auf einem zylindrischen Achsstummel (21) des Steuerrades (8) drehbeweglich befestigt ist, sowie aus der Klinke (14), die zwei Bohrungen aufweist,in welche sich ein erster Lagerzapfen in Form des Stiftes (19) auf der Trägheitsscheibe (13) sowie ein zweiter auf dem Steuerrad (8) angeformter Lagerzapfen (20) erstrecken. Durch die Relativbewegung zwischen Trägheitsscheibe (13) und Steuerrad (8) ergibt sich eine Verschwenkung der Klinke (14) nach in Fig. 3 außen in die Innenverzahnung (18) der Steuerscheibe (12) hinein, wenn bei einem raschen Gurtabzug das Steuerrad (8) in Fig. 3 im Uhrzeigersinn über einen gewissen Beschleunigungswert hinaus von der Welle abgezogen wird und dabei den zweiten Lagerzapfen (20) für die Klinke (14) mitnimmt und so die Klinke in die Innenverzahnung (18) hinverschwenkt wird. Hat die Klinke (14) ihre Sperrstellung, die in den Fig. 1 und 3 nicht eingezeichnet ist, erreicht, so wird der Stift (19) auf der Trägheitsscheibe (13) durch die Anlage der Rückseite der Klinke (14) an einen Anschlag (29), der auf dem Steuerrad (8) angeformt ist, entlastet.

Ist so der von der gurtbandsensitiven Einrichtung erzeugte Sperrzustand erreicht, so bewegt sich die gesperrte Kombination aus Steuerscheibe 12, Trägheitsscheibe (13) und Steuerrad (8) zusammen mit der Welle (1) gegen die Wirkung von nicht dargestellten Federn in die Blockierlage.

Wie man aus Fig. 3 erkennt, greift der Stift (19) in ein Langloch der gurtbandsensitiven Klinke (14) ein und verschwenkt so letztere nach außen, wenn die Trägheitsscheibe (13) mit ihrer Bewegung hinter der Bewegung des Steuerrades (8) nachhinkt, wenn der Gurt von der Welle (1) abgezogen wird. Falls dieser Abzug einen mittels der Feder (17) einstellbaren Beschleunigungsgrenzwert übersteigt, besitzt die Trägheitsscheibe (13) genügend Beharrungsvermögen, um die Wirkung der Feder (17) zu überwinden. Dabei wird die Klinke (14) nach außen bewegt und gelangt in der oben beschriebenen Weise in Eingriff mit den Zähnen der Innenverzahnung (18) der Steuerscheibe (12). Weiterer Zug am Gurt bewirkt dann eine Verschwenkung der Steuerscheibe (12) und das volle Blockieren der Welle (1) in der beschriebenen Weise.

Der zuverlässige Betrieb des Gurtaufrollers ist abhängig von der genauen Dimensionierung der die Sperrung auslösenden Klinken. Wegen der Materialeigenschaften der für die Klinkenkonstruktion verwendeten Kunststoffe muß besonderes Augenmerk darauf gelegt werden, daß auch bei höheren Temperaturen und einer dadurch möglichen Deformation der Bauteile besonders unter Druck der Gurtaufroller noch zuverlässig arbeitet.

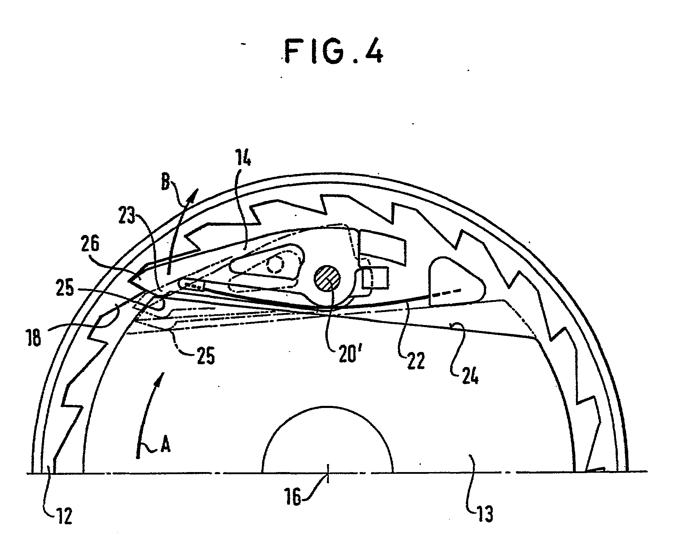

Fig. 4 zeigt eine etwas abgewandelte Steuermechanik des Gurtband-ansprechenden Sensors. Die gurtbandsensitive Klinke (14) ist auch hier am Steuerrad angelenkt, liegt jedoch unter der Wirkung einer Blattfeder (22) mit einem Vorsprung (23) an einer geradlinig verlaufenden Umfangssteuernockenfläche (24) an, wie dies entsprechend den ausgezogenen Linien in Fig. 4 dargestellt ist, und zwar bei voll eingesteuerter gurtbandsensitiver Klinke (14). Diese Umfangssteuernockenfläche (24) verläuft senkrecht zur Drehachse (16) der Trägheitsscheibe (13). Die Trägheitsscheibe (13) ist zusammen mit der zugehörigen Klinke (14) in strichpunktierter Linie in der Ausgangsstellung (Ruhestellung) und in einer Zwischenstellung, in der noch kein Zahneingriff einfolgt, dargestellt. Es ist aus der Zeichnung deutlich erkennbar, daß mit zunehmender Drehung der Trägheitsscheibe (13) um die Drehachse (16) entsprechend dem Pfeil (A) der Vorsprung (23) der Klinke (14) sich entlang der Umfangssteuernockenfläche (24) nach außen bewegt (d.h. der Berührungspunkt (25) bewegt sich nach außen) und die Klinke (14) sich entsprechend dem Pfeil (B) um ihre Drehachse (20') dreht. Dies hat zur Folge, daß sich der Eingriffszahn (26) der Klinke (14) zunehmend der Innenverzahnung (18) nähert, und war bis in die vollständig eingesteuerte Lage gemäß den ausgezeichneten Linien in Fig. 4.

Über die Blattfeder (22) übt die Klinke an der Stelle des Berührungspunktes (25) eine Normalkraft auf die Umfangssteuernockenfläche (24) der Trägheitsscheibe (13) aus und diese Normalkraft bewirkt mit einem bestimmten Hebelarm ein Drehmoment entgegen der Pfeilrichtung (A). Bei der Darstellung in Fig. 4 nimmt der zugehörige Hebelarm erheblich zu, obwohl bei konstanter Drehbeschleunigung der Trägheitsscheibe das antreibende Drehmoment der Trägheitsscheibe (13) konstant bleibt.

Entsprechend der Darstellung in Fig. 5a hat die Umfangssteuernockenfläche (24) ab einem Grenzberührungspunkt (27) eine aus der Zeichnung ersichtliche abfallende Charakteristik mit der Wirkung, daß das von der gurtbandsensitiven Klinke auf die Trägheitsscheibe ausgeübte Drehmoment ab dieser Stelle bei weiterer Drehung der Trägheitsscheibe (13) in Richtung des Pfeiles (A) abnimmt und somit von diesem Punkt an die Klinke (14) in den vollen Eingriff mit der Innenverzahnung (18) "schnellt", da die entsprechende Reaktionskraft im Berührungsbereich zwischen Klinke und Trägheitsscheibe dafür verantwortlich ist, wie schnell ein Eingriff bzw. wann ein Eingriff zwischen Verzahnung (18) und Klinke (14) erfolgt. Der Grenzberührungspunkt (27) entspricht der Stellung des Eingriffszahns (26) der Klinke (14), in der gerade an allen Zähnen der Innenverzahnung noch kein Eingriff erfolgt. Durch diese abrupte, schnellere Eingriffsbewegung der Klinke werden Herstellungstoleranzen und Wegdifferenzen der Klinke in zeitlicher Hinsicht kompensiert und somit an allen Umfangsstellen gleiche Eingriffsverhältnisse bewirkt.

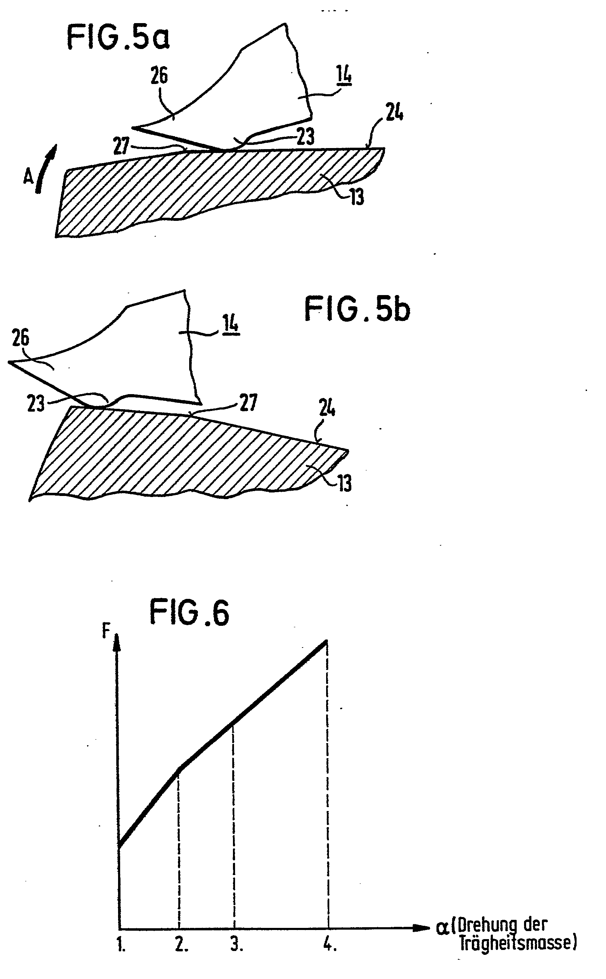

Fig. 6 zeigt im Diagramm das Verhältnis zwischen der Kraftveränderung und der Drehung der Trägheitsmasse mit vier Drehorten, wobei der Drehort 1. die Ruhestellung entsprechend Fig. 5a, 2. die Kraftveränderung durch die abfallende Charakteristik, 3. die Berührung zwischen Klinkenspitze und Innenverzahnung und 4. die voll eingesteuerte Klinke gemäß Fig. 5b charakterisiert.

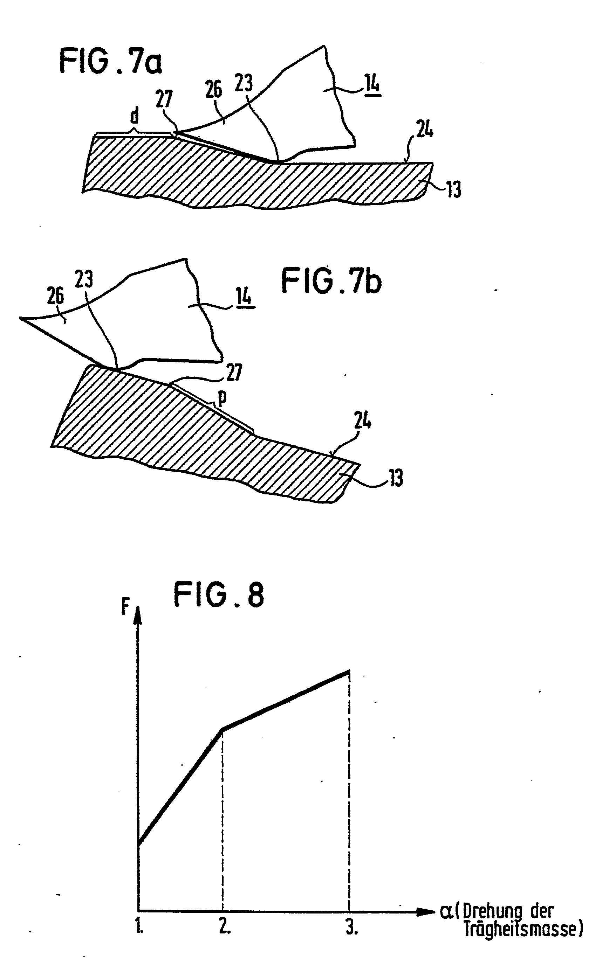

Bei der abgewandelten Ausführungsform gemäß Fig. 7a und 7b hat die Steuernockenfläche (24) innerhalb des Bereiches d der abfallenden Charakteristik einen Bereich p ansteigender Charakteristik. Dies hat zur Folge, daß bei der Drehung der Trägheitsscheibe (13) die Feder (22) früher ausgelenkt wird und sich die Federkraft früher erhöht. Dies erlaubt den Einsatz einer leichteren bzw. schwächer dimensionierten Feder. Das Verhältnis zwischen der Drehung der Trägheitsmasse und der Veränderung der Kraft (F) ist schematisch in Fig. 8 dargestellt, und zwar auf vergleichbarer Weise mit Fig. 6. Die Drehstellungspunkte auf der Abszisse bezeichnen die Ruhestellung gemäß Fig. 7a (1.), die Berührung der Klinkenspitze (26) und der Verzahnung (18) und die Kraftveränderung durch die abfallende Kontur der Trägheitsmasse (2.) und die voll eingesteuerte Klinke gemäß Fig. 7b (3.).

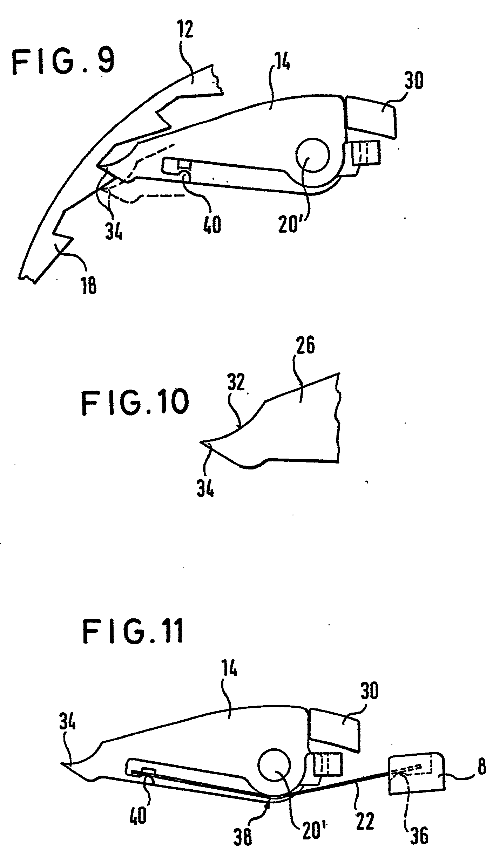

Aus Fig. 9 ist ersichtlich, daß die Sensorklinke (14) in ihrer Sperrstellung an einem Anschlag (30) zur Anlage kommt. Ebenfalls aus Fig. 9 ist in gestrichelten Linien die Einsteuerstellung der Klinkenspitze ersichtlich. Die Klinke ist in ihrem Spitzenbereich (26) mit einer konkaven Ausnehmung (32) versehen, die in eine sehr scharfe Spitze (34) der Sensorklinke (14) ausläuft. Nur diese eigentliche Spitze der Sensorklinke kommt beim Einsteuern mit den Zähnen (18) der Steuerscheibe (12) in Berührung. Dadurch werden Klinkenabweisungen vermieden und die gurtbandsensitive Klinke wird in die Verzahnung der Steuerscheibe (12) gezogen, was gleichmäßigere WS-Werte, d.h. gurtbandsensitive Werte in jeder Stellung, zur Folge hat.

In Fig. 10 ist die eigentliche Klinkenspitze (26) mit der Hohlkehle (32) und der Spitze (34) noch einmal in größerem Maßstab dargestellt.

Fig. 11 zeigt die Sensorklinke (14) zusammen mit der bereits beschriebenen Blattfeder (22). Die Blattfeder (22) ist an einem Ende längsverschieblich auf einem Lager (36) des Steuerrades (8) abgestützt, d.h. es ist eine Relativbewegung zwischen Blattfeder (22) und Steuerrad in diesem Bereich möglich. Keine Relativbewegung zwischen Blattfeder (22) und Klinke (14) erfolgt im Bereich (38), wo die Blattfeder im Bereich der Achse (20') umgelenkt wird, um eine Vorspannung zu ergeben, und an einem Federlager (40) am anderen Ende der Blattfeder, da die Blattfeder in diesem Federlager (40) der Klinke (14) so befestigt ist, daß eine Längsbewegung der Blattfeder relativ zur Klinke (14) dort nicht möglich ist.

Dadurch werden weitere Reibungsverluste an der WS-Klinke vermieden. Wie gesagt, tritt eine Längsbewegung der Blattfeder nur bei dem Federlager (36) auf.

## Patentansprüche

1. Sensor- und Sperrvorrichtung für ein Sicherheitsgurtsystem mit einer drehbaren Trägheitsmasse (13), einer auf einer Umfangssteuernockenfläche (24) der Trägheitsmasse unter Vorspannung anliegenden Sensorklinke (14) und einer Innenverzahnung (18), in die die Sensorklinke (14), gesteuert durch die Drehung der Trägheitsmasse (13), eingreifen kann, dadurch gekennzeichnet, daß die Umfangssteuernockenfläche (24) ab einem bestimmten Grenzberührungspunkt (27) zwischen Sensorklinke (14) und Umfangssteuernockenfläche (24), der die nächstmögliche Nichteingriffsstellung zwischen Sensorklinke (14) und Innenverzahnung (18) definiert, von dem Grenzberührungspunkt (27) aus hinsichtlich einer Verringerung des Drehmomentes seitens der Sensorklinke (14) auf die Trägheitsmasse (13) abfallend verläuft.

2. Sensor- und Sperrvorrichtung nach Anspruch 1, dadurch gekennzeichnet, daß die Umfangssteuernockenfläche (24) innerhalb des Bereichs (d) der abfallenden Charakteristik über eine bestimmte Strecke (p) ansteigend verläuft.

3. Sensor- und Sperrvorrichtung nach Anspruch 1 oder 2, dadurch gekennzeichnet, daß die Sensorklinke (14) von einer Blattfeder (22) vorgespannt ist.

4. Sensor- und Sperrvorrichtung nach einem der Ansprüche 1 bis 3, dadurch gekennzeichnet, daß der Sensor ein gurtbandansprechender Sensor ist.

5. Sensor- und Sperrvorrichtung nach einem der Ansprüche 1 bis 4, dadurch gekennzeichnet, daß nur die eigentliche Klinkenspitze (34) beim Einsteuern in die .Innenverzahnung (18) in Berührung kommt.

6. Sensor- und Sperrvorrichtung nach Anspruch 3, dadurch gekennzeichnet, daß die Blattfeder (22) zur Vermeidung einer relativen Längsbewegung an der Sensorklinke (14) befestigt ist.

7. Sensor- und Sperrvorrichtung nach Anspruch 6, dadurch gekennzeichnet, daß die Blattfeder (22) außerhalb der Sensorklinke (14) längsbeweglich abgestützt ist.

## Revendications

1. Dispositif de capteur et de blocage pour un système de ceinture de sécurité, avec une masse d'inertie tournante (13), un cliquet de capteur (14) appuyant sous précontrainte sur une surface périphérique (24) de came de commande et une denture intérieure (18), dans laquelle le cliquet de capteur (14) peut venir en contact, en étant commandé par la rotation de la masse d'inertie (13), caractérisé en ce qu'à partir d'un point limite de contact (27) déterminé, entre cliquet de capteur (14) et surface périphérique (24) de came de commande, la surface périphérique (24) de came de commande qui définit la position de non-contact la plus proche possible entre cliquet de capteur (14) et denture intérieure (18), évolue, depuis le point limite de contact (27), dans le sens d'une descente tendant à une limitation du couple de rotation exercé par le cliquet de capteur (14) sur la masse d'inertie (13).

2. Dispositif de capteur et de blocage selon la revendication 1, caractérisé en ce que la surface périphérique (24) de came de commande évolue à l'intérieur de la zone (d) de la caractéristique descendante en montant sur une distance déterminée (p).

3. Dispositif de capteur et de blocage selon la revendication 1 ou 2, caractérisé en ce que le cliquet de capteur (14) est précontraint par un ressort à lame (22).

4. Dispositif de capteur et de blocage selon l'une des revendications 1 à 3, caractérisé en ce que le capteur est un capteur réagissant à l'état de la bande de ceinture.

5. Dispositif de capteur et de blocage selon l'une des revendications 1 à 4, caractérisé en ce que lors de la commande d'intervention, seule la pointe de cliquet (34) proprement dite vient en contact dans la denture intérieure (18).

6. Dispositif de capteur et de blocage selon la revendication 3, caractérisé en ce que le ressort à lame (22) est fixé sur le cliquet de ressort (14) en vue d'éviter tout déplacement longitudinal.

7. Dispositif de capteur et de blocage selon la revendication 6, caractérisé en ce que le ressort à lame (22) est soutenu de manière mobile longitudinalement, à l'extérieur du cliquet de capteur (14).

## Claims

1. Sensing and locking device for a safety belt system with a rotatable inertia mass (13), a sensing pawl (14) biased into contact with a peripheral control cam surface (24) of the inertia mass and an internal tooth region (18) into which the sensing pawl (14) can engage, controlled by the rotation of the inertia mass (13), characterised in that the peripheral control cam surface (24) slopes downwardly away from a predetermined interface contact point (27) between the sensing pawl (14) and the peripheral cam control surface (24), which point defines the closest possible non-engagement position between the sensing pawl (14) and the internal tooth region (18), starting from the interface contact point (27), for reducing the torque on the inertia mass (13) caused by the sensing pawl (14).

2. Sensing and locking device according to claim 1, characterised in that the peripheral control cam surface (24) within the region (d) of falling characteristic rises over a predetermined distance (p).

3. Sensing and locking device according to claim 1 or 2, characterised in that the sensing pawl (14) is biased by a leaf spring (22).

4. Sensing and locking device according to any of claims 1 to 3, characterised in that the sensor is a webbing sensitive sensor.

5. Sensing and locking device according to any of claims 1 to 4, characterised in that only the actual pawl tip (34) makes contact with the internal tooth region (18) during activation.

6. Sensing and locking device according to claim 3, characterised in that the leaf spring (22) is secured on the sensing pawl (14) to avoid relative longitudinal motion.

7. Sensing and locking device according to claim 6, characterised in that the leaf spring (22) is supported longitudinally movably outside the sensing pawl (14).

# FIG.1

EP 0 265 926 B1

FIG.2

FIG.3

# FIG.4

# FIG.5a

26

14

27    23

24

A

13

# FIG.5b

26

14

23

27

24

13

# FIG.6

F

α (Drehung der Trägheitsmasse)

1.    2.    3.    4.

## FIG.7a

## FIG.7b

## FIG.8

FIG.9

FIG.10

FIG.11